# EUROPÄISCHE PATENTSCHRIFT

(11) **EP 4 269 198 B1**
(45) Veröffentlichungstag und Bekanntmachung des Hinweises auf die Patenterteilung: **28.01.2026**
(21) Anmeldenummer: 23164494.9
(22) Anmeldetag: 27.03.2023
(51) Int. Cl.: B60T 13/74, B60T 17/22, F16D 65/18

(54) **VORRICHTUNG, BREMSSYSTEM UND VERFAHREN ZUR KRAFTGRADIENTENBASIERTEN STEUERUNG EINER PASSIVEN BREMSEINRICHTUNG**
DEVICE, BRAKE SYSTEM AND METHOD FOR CONTROLLING A PASSIVE BRAKE DEVICE BASED ON A FORCE GRADIENT
DISPOSITIF, SYSTÈME DE FREINAGE ET PROCÉDÉ DE COMMANDE D'UN DISPOSITIF DE FREINAGE PASSIF BASÉ SUR UN GRADIENT DE FORCE

(30) Priorität: 27.04.2022 DE 102022110230
(43) Veröffentlichungstag der Anmeldung: 01.11.2023
(73) Patentinhaber: KNORR-BREMSE Systeme für Schienenfahrzeuge GmbH, 80809 München (DE)
(72) Erfinder: VOLLMER, Achim, 82024 Taufkirchen (DE); MAHL, Christoph, 85235 Odelzhausen (DE); SCHROEDER CARDOZO, William, 80335 München (DE)

(56) Entgegenhaltungen:
- WO-A1-2021/198994
- DE-A1- 102017 215 289

## Beschreibung

Die vorliegende Erfindung betrifft eine Vorrichtung, ein Bremssystem und Verfahren zur kraftgradientenbasierten Steuerung einer passiven Bremseinrichtung, insbesondere einer elektromechanischen Bremseinrichtung.

### Stand der Technik

In der Praxis ist bekannt, dass am Markt vorhandene bzw. bekannte elektromechanische Bremsen in der Regel als aktive Bremsen ausgeführt sind, d.h. die Bremskraft wird direkt von einem Motor geregelt. Dabei werden in dem Bremskrafterzeuger meistens Pneumatik-, Hydraulik oder Federkraft-Steuerungen verwendet, welche eine Gleichgewichtslage mit der aufgebrachten Bremskraft zwischen Bremsbelag und Bremsscheibe hervorrufen. Die Position des Belags zur Scheibe ist somit das Ergebnis der anliegenden Kräfte. Für die Trennung des Bremsbelags von der Scheibe wird eine Rückstellfeder verwendet, dessen Federkraft den Bremsbelag von der Bremsscheibe abhebt und dadurch einen Luftspalt zwischen beiden Bauteilen erzeugt.

Für die Realisierung einer passiven Bremse, bei welcher ein Motor gegen einen Krafterzeuger wie z.B. Feder arbeitet, ergibt sich hingegen das Problem, dass zwangsweise eine (starke) Dynamik durch die Wechselwirkung zwischen Motor und Feder hervorgerufen wird. Diese Dynamik wird ferner dadurch begünstigt, dass die zumeist hohen Federkräfte nicht gedämpft werden. Es sind also Schwingungen und Eigenfrequenzen im Anwendungsbereich einer passiven Bremse zu erkennen, welche sich nachteilig auf den Bremsvorgang auswirken.

Zur Beherrschung dieser Schwingungen/Eigenfrequenzen bzw. der Dynamik im Bremssystem könnte optional die Reibung erhöht werden. Dies steht jedoch im direkten Widerspruch zur Forderung einer möglichst geringen Reibung bei passiven Bremsen. Weshalb der Einsatz als eines Elektromotors als Generator empfehlenswerter erscheint, um bei einer zuverlässigen bzw. sicheren Aktivierung der Bremse gleichzeitig die Dynamik zu beherrschen. Dabei wirkt eine Beschaltung zwischen den Windungen des Motors wie eine Geschwindigkeitsregelung per Selbstinduktion.

Bisher wurden vorwiegend Bürstenmotoren in elektromechanischen Bremsen eingesetzt. Diese besitzen allerdings verschleißbehaftete Bauteile und sind somit für längere Wartungzyklen bzw. einen wartungsarmen Betrieb ungeeignet. Als Alternative könnten bürstenlose Motoren verwendet werden, welche günstig und einfach in der Wartung und Herstellung sind, oder aber Schrittmotoren, auch wenn deren Geschwindigkeitsbereich begrenzt ist.

Beispielsweise in der Schienenfahrzeugindustrie sind in dem vorliegenden Zusammenhang passive Bremsen bzw. Bremsaktuatoren, die auf dem Prinzip der Federkraft beruhen, weit verbreitet. Vor allem in Straßenbahnen werden sie häufig im Sinne eines Fail-Safe-Prinzips und als Feststellbremse für den langfristigen Stillstand des Fahrzeugs eingesetzt. Hydraulisch oder pneumatisch basierte Prinzipien dominieren hierbei den heutigen Schienenfahrzeugmarkt, wobei im Hinblick auf eine höhere Modularität und geringere Wartungskosten elektromechanische Bremsen bzw. Bremsaktuatoren jedoch eine interessante Alternative zu sein scheinen. Eine technische Herausforderung für das elektromechanische Bremssystem ist die ausfallsichere Bremsbetätigung, d.h. bei einem Ausfall sollte die Bremskraft durch Abschalten der elektrischen Energie des Aktuators aufgebracht werden und die Energie der Federn sollte die Bremskraft aufbauen. Selbst bei dieser passiven Anwendung sollte der Gradient der Bremskraft kontrolliert werden, um übermäßige Rucke im Fahrzeug und Flachstellen aufgrund von Radrutschen zu vermeiden. In fluidbasierten Systemen, wie hydraulischen oder pneumatischen Systemen, wird der Bremskraftgradient durch eine Reihe passiver Elemente gesteuert, die die Fluidgeschwindigkeit begrenzen, z. B. eine Düse.

Beispiele aus dem Stand der Technik sind beispielweise beschrieben in DE 10 2017 215289 A1 und WO 2021/198994 A1, wobei sich insbesondere die DE 10 2017 215289 A1 auf einen Bremsaktuator für ein Schienenfahrzeug bezieht, mit einem Gehäuse; einem Anpressteil, das dazu konfiguriert ist, an eine Bremsscheibe gedrückt zu werden; einem Mittel zum Bewegen des Anpressteils; einer Logikeinheit im oder am Gehäuse, die dazu konfiguriert ist, das Mittel zum Bewegen des Anpressteils zu steuern; einem Steuerungsanschluss am Gehäuse; einem Versorgungsanschluss am Gehäuse zum Versorgen des Bremsaktuators mit Energie; und einer Leistungselektronik mit Energiespeicher, die im oder am Gehäuse angeordnet ist und nur dem einen Bremsaktuator zugeordnet ist.

### Aufgabe

Es ist daher Aufgabe der vorliegenden Erfindung, eine Vorrichtung und ein Verfahren zur kraftgradientenbasierten Steuerung einer passiven Bremseinrichtung bereitzustellen.

### Offenbarung der Erfindung

Diese Aufgabe wird erfindungsgemäß gelöst durch eine Vorrichtung mit den Merkmalen des Anspruchs 1. Danach ist vorgesehen, dass eine Vorrichtung zur kraftgradientenbasierten Steuerung einer passiven Bremseinrichtung bereitgestellt wird, wobei die Vorrichtung Folgendes umfasst:
- einen Elektromotor zum Lösen der passiven Bremseinrichtung gegen eine Federkraft,
- eine Motorsteuerung zur Steuerung des Elektromotors, welche zumindest einfach elektrisch mit dem Elektromotor verbunden ist,
- zumindest ein passives elektronisches Element mit einem elektrischen Widerstand, welches mit dem Elektromotor und der Motorsteuerung verbunden ist, und
- zumindest eine Kontaktschaltung, welche mit dem Elektromotor, der Motorsteuerung und dem zumindest einem passiven elektronischen Element verbunden ist,
wobei die zumindest eine Kontaktschaltung zwischen einem ersten, elektrisch nichtleitenden Schaltzustand und einem zweiten, elektrisch leitenden Schaltzustand umschaltbar ist, wobei die Vorrichtung durch den ersten Schaltzustand zur Gegeninduktion des Elektromotors kurzschließbar ist, und wobei ein Bremskraftgradient der passiven Bremseinrichtung durch den elektrischen Widerstand steuerbar ist.

Bei der Vorrichtung handelt es sich insbesondere um eine Vorrichtung zur kraftgradientenbasierten Steuerung einer passiven elektromechanischen Bremseinrichtung.

Die Erfindung basiert auf dem Grundgedanken, dass über passive elektronische Bauteile oder Elemente, wie z.B. ein Widerstand, eine Spule und/oder ein Kondensator, das Drehgeschwindigkeitsprofil des Elektromotors beeinflusst werden kann. Damit können Bremsgradienten und Bremsanlegezeiten der Bremseinrichtung genauer und besser ausgelegt werden. Dies ermöglicht zudem eine freiere Auslegung von Motor und Getriebe sowie der Transformation zwischen Rotation und Translation.

Der Elektromotor wird zum Lösen der Bremseinrichtung gegen eine Federkraft betrieben, wobei der Elektromotor selbsthemmungsfrei mechanisch aktiviert wird. Um das Anlegen der Bremse der Bremseinrichtung in bestimmten Zeitabschnitten mit dem elektrischen Motor erreichen zu können, wird eine definierte Federkraft und eine entsprechende mechanische Übersetzung verwendet.

Der Elektromotor "arbeitet" nur beim eigentlichen Lösen der Bremseinrichtung. Im gelösten Zustand der Bremseinrichtung hingegen hält der Elektromotor lediglich eine bestimmte Kraft entgegen der Federkraft aufrecht. Diese Haltekraft ist geringer als die Kraft, die zum Lösen der Bremse notwendig ist, da es im gelösten Zustand die mechanische Reibung und die Massenträgheiten vereinfachen, die Position der Bremsbeläge zu halten.

Da ein Anlegen auch ohne Elektromotor bzw. bei dessen Ausfall sichergestellt sein muss, wird die Federvorspannung und Mechanik so ausgelegt, dass die Bremsbewegung unter allen Bedingungen durchführbar ist. Dies ist wichtig, um einen ausreichenden Sicherheitsnachweis auch ohne Elektronik erbringen zu können.

Nach dem Einleiten der Bremsbewegung findet eine Beschleunigung der Bremsbeläge in Richtung der Bremsscheiben statt, da der Elektromotor die Bremsbeläge nicht mehr gegen die Federkraft hält. Dies führt im Allgemeinen zu sehr hohe Anlegegeschwindigkeiten und einem starken Aufschlag der Bremsbeläge auf die jeweilige Bremsscheibe.

Durch eine Beschaltung werden im Sicherheitsfall die Motorenwindungen des Elektromotors mit passiven Bauteilen wie Widerständen oder Kondensatoren kurzgeschlossen. Durch die entsprechende Dimensionierung dieser Bauteile kann der Gradient für den Bremskraftaufbau eingestellt werden. Der Elektromotor wird also im Sicherheitsfall als Generator zum Bremsen eingesetzt. Dabei werden die Motorregelung und die Windungen des Elektromotors kurzgeschlossen. Somit kann einem zu schnellen Zuspannen der Bremseinrichtung entgegengewirkt werden und gleichzeitig die gewünschte Anlegezeit erreicht werden.

Der Elektromotor kann allerdings im Bedarfsfall auch zur Beschleunigung des Bremsvorgangs verwendet werden, indem er in die gleiche Richtung wie die Federkraft wirkt. Ein Einsatz von Schrittmotoren als Elektromotoren ist vorliegend möglich, da deren Geschwindigkeitsnachteile beim Zuspannen der Bremseinrichtung durch die herrschende Federkraft ausgeglichen werden können.

Weitere Einzelheiten und Vorteile der Erfindung sollen nun anhand eines in der Zeichnung dargestellten Ausführungsbeispiels näher erläutert werden.

Es zeigen:
- Fig. 1: ein Schaltbild eines Ausführungsbeispiels einer Bremssteuerung einer passiven elektromechanischen Bremse;
- Fig. 2: ein Anlegeverhalten einer passiven elektromechanischen Bremse gemäß Fig. 1 bei unterschiedlichen Widerständen;
- Fig.: 3 ein Schaltbild eines weiteren Ausführungsbeispiels einer Bremssteuerung einer passiven elektromechanischen Bremse; und
- Fig. 4: ein Anlegeverhalten einer passiven elektromechanischen Bremse gemäß Fig. 3 bei unterschiedlichen Widerständen.

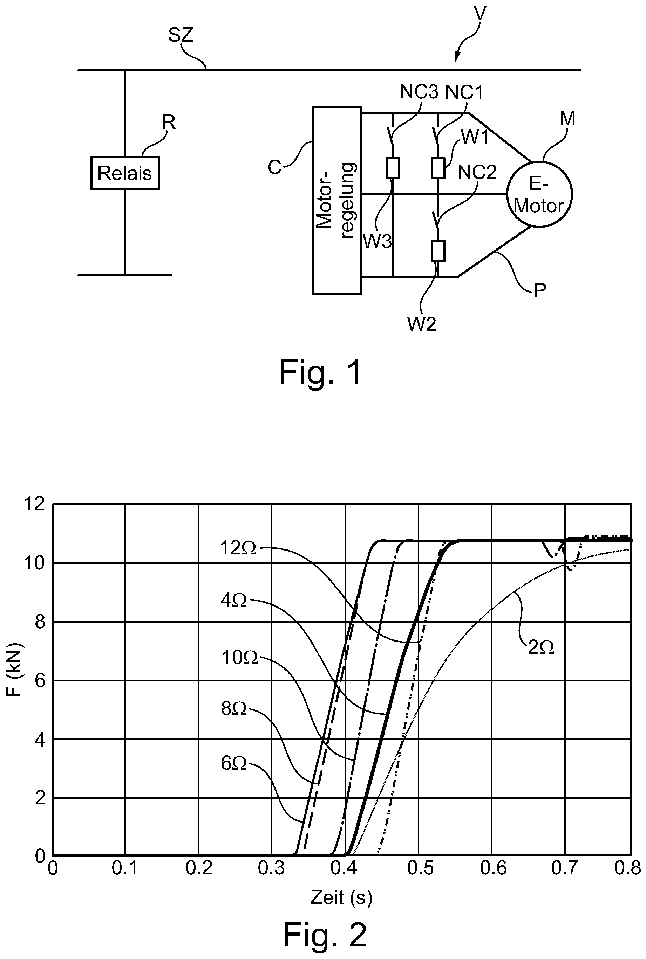

Die Vorrichtung V in Fig. 1 umfasst einen Elektromotor M, eine Motorregelung C, einen ersten, zweiten und dritten normally-closed-Kontakt NC1, NC2, NC3, einen ersten, zweiten und dritten Widerstand W1, W2, W3 und ein Relais R.

Der Elektromotor M ist elektrisch mit der Motorregelung C verbunden.

Der erste Widerstand W1 und der zweite Widerstand W2 bilden eine Reihenschaltung und die Reihenschaltung aus dem ersten und dem zweiten Widerstand W1, W2 befindet sich in einer Parallelschaltung P mit dem dritten Widerstand W3.

Die Parallelschaltung P ist zwischen der Motorregelung C und dem Elektromotor M angeordnet.

Der erste Widerstand W1 ist über den ersten normally-closed-Kontakt NC1, der zweite Widerstand W2 ist über den zweiten normally-closed-Kontakt NC2 und der dritte Widerstand W3 ist über den dritten normally-closed-Kontakt NC3 in der Parallelschaltung P zuschaltbar.

In Fig. 1 hält ein Relais R auf der Sicherheitsschleife des Zuges SZ die normally-closed-Kontakte NC1 bis NC3 offen bis eine Notbremsung angefordert wird. Im Anforderungsfall wechselt das Relais R in seinen unbestromten Zustand, wodurch die normally-closed-Kontakte NC1 bis NC3 schließen und dadurch ein Strom zwischen den Windungen fließt, was zu einer Gegeninduktion im Elektromotor M und damit einem Abbremsen des Elektromotors führt. Das Abbremsen des Elektromotors M wirkt der Federkraft der passiven Bremseinrichtung beim Zuspannen entgegen.

In dem Diagramm in Fig. 2 ist die Bremskraft F (in kN) über die Zeit (in s) aufgetragen.

Dabei sind in dem Diagramm die Bremskraftverläufe für verschiedene Widerstände (in Ω) wiedergegeben, welche bei einer Bremskraft F von 0 kN starten, d.h. die Bremse ist vollständig gelöst, und bis zum einem Plateau-Wert von ca. 11 kN steigen, welcher im Wesentlichen den Zustand eines vollständig gebremsten Fahrzeugs repräsentiert.

Für die in Fig. 2 gezeigten Bremskraftverläufe sind folgende Widerstände in einer erfindungsgemäßen Vorrichtung verwendet worden: 2 Ω, 4 Ω, 6 Ω, 8 Ω, 10 Ω und 12 Ω.

Im Diagramm gemäß Fig. 2 ist zu sehen, dass bei einer Verwendung eines 2-Ω-Widerstandes die Bremskraft nach ca. 0,41 s ansteigt und erst deutlich nach 0,8 s den Plateau-Wert erreicht, wobei der Gradient der Bremskraftzunahme mit zunehmender Zeit abnimmt bzw. abflacht und sich die Kurve folglich annähernd asymptotisch dem Plateau-Wert nähert.

Bei der Verwendung eines 4-Ω-Widerstandes steigt die Bremskraft bei ca. 0,405 s an und zwar mit einem deutlich steileren Gradienten an, so dass der Plateau-Wert bereits bei ca. 0,55 s erreicht ist. Im 4-Ω-Kurvenverlauf ist nur noch ab Erreichen einer Bremskraft von ca. 6 kN ein leichtes Abnehmen des Gradienten zu verzeichnen.

Bei der Verwendung eines 6-Ω-Widerstandes steigt die Bremskraft ab ca. 0,33 s stark und annähernd linear an, weshalb der Plateau-Wert nach bereits ca. 0,12 s erreicht wird.

Ähnlich verhält es sich bei der Verwendung eines 8-Ω-Widerstandes, bei welchem die Bremskraft ähnlich früh wie bei der Verwendung eines 6-Ω-Widerstandes ansteigt und zwar nach ca. 0,34 s. Die Kurve des 8-Ω-Widerstandes erreicht zum annähernd gleichen Zeitpunkt wie die 6-Ω-Kurve den Plateau-Wert, weshalb der Gradient des annähernd linearen Anstiegs noch leicht größer ist als derjenige der 6-Ω-Kurve.

Auffallend ist, dass bei einer Verwendung eines noch größeren Widerstandes von 10 Ω die Bremskraft erst später nach ca. 0,38 s ansteigt und danach annähernd parallel zur 8-Ω-Kurve verläuft, um nach ca. 0,106 s, also bei ca. 0,486 s, den Plateau-Wert zu erreichen. Im weiteren Kurvenverlauf kommt es zu einem Schwingen um den Plateau-Wert ab ca. 0,674 s, wobei ein maximales Unterschwingen des Plateau-Wertes von ca. 0,6 kN zu verzeichnen ist.

Gemäß dem Kurvenverlauf für die Verwendung eines 12-Ω-Widerstandes steigt die Bremskraft erst ab ca. 0,446 s an und zwar annähernd parallel zu der 8-Ω-Kurve bzw. der 10-Ω-Kurve. Die 12-Ω-Kurve erreicht bei ca. 0,54 s den Plateau-Wert und schwingt ebenfalls noch einmal zeitversetzt ab ca. 0,717 s um den Plateau-Wert, wobei hier ein maximales Unterschwingen des Plateau-Wertes von ca. 1 kN auftritt.

Zusammenfassend ist also zu erkennen, dass die Erhöhung des Widerstandswertes von 2 Ω über 4 Ω auf 6 Ω den Anstieg der Bremskraft F in Richtung eines früheren Zeitpunkts verschiebt und zudem der Gradient der Bremskraft F ansteigt.

Eine weitere Erhöhung auf 8 Ω verschiebt den Anstieg der Bremskraft F hingegen in Richtung eines späteren Zeitpunkts, ohne dass der Gradient wesentlich weiter gesteigert werden kann.

Gleiches gilt für Widerstandswerte von 10 Ω und 12 Ω, wobei bei den entsprechenden Kurven dieser beiden Widerstandswerte auffällig ist, dass es nach Erreichen des Plateau-Wertes zu einem zeitlich verzögerten Schwingen um den Plateau-Wert kommt, welches gemäß den Kurvenverläufen aber stark gedämpft ist.

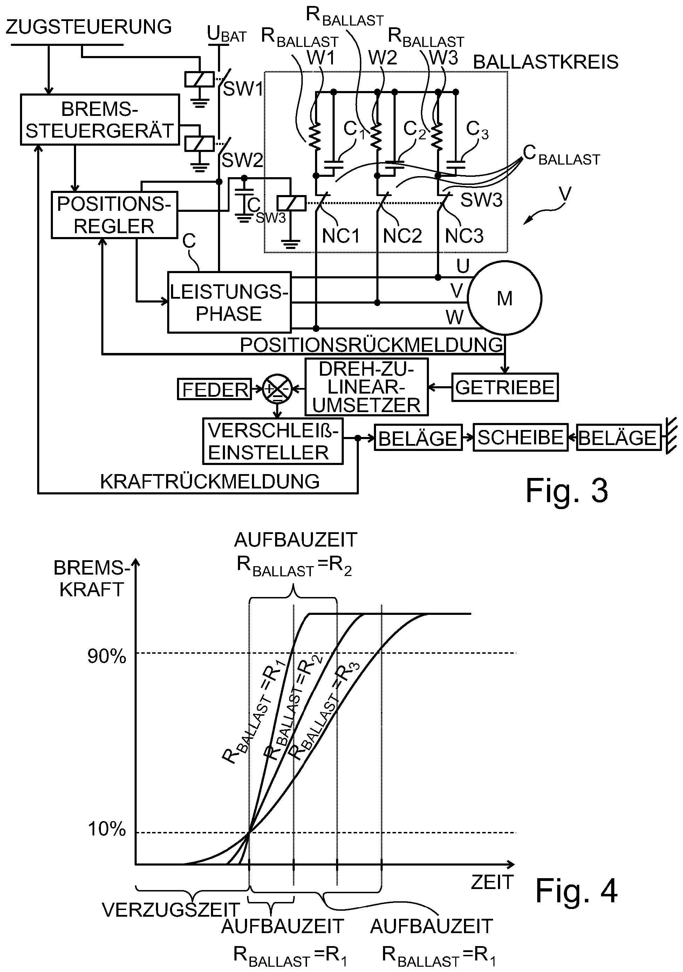

Die Vorrichtung V in Fig. 3 ist im Wesentlichen gleich zu der Vorrichtung V in Fig. 1, so dass nur Unterschiede im Folgenden beschrieben werden.

Ferner ist in Fig. 3 ein Bremssystem BS gezeigt, in welchem die besagte Vorrichtung V eingerichtet ist.

In anderen Worten ist die besagte Vorrichtung V konfiguriert, um in einem Bremssystem BS eingerichtet zu sein und/oder betreibbar oder betrieben zu sein/werden.

Alternativ oder ergänzend weist ein Bremssystem BS zumindest die besagte Vorrichtung V auf.

Wie in Fig. 3 gezeigt ist, sind dem Bremsystem BS ferner eine oder mehrere Scheiben, insbesondere Bremsscheiben, und zu jeder Scheibe jeweils ein Paar von Belägen, insbesondere Bremsbelägen, zugeordnet und/oder das Bremssystem BS umfasst eben solche.

Die jeweiligen Bremsscheiben sind konfiguriert, um gegen die Bremsscheibe drückbar zu sein oder gedrückt zu werden zur Betätigung oder Aufrechterhaltung einer Bremsung, insbesondere mittels einer bzw. der Feder, welche in dem Bremssystem BS umfasst und/oder diesem zugeordnet ist.

In anderen Worten ist/wird eine eine Bremskraft erzeugbar/erzeugt, indem die zwei Bremsbeläge gegen die insbesondere rotierende Bremsscheibe drückbar sind/gedrückt werden, insbesondere mittels einer Feder, welche in dem Bremssystem BS umfasst und/oder diesem zugeordnet ist.

Ein Verschleißeinsteller bzw. Verschleißnachsteller, welcher in dem Bremssystem BS umfasst und/oder diesem zugeordnet ist, ist mit der besagten Feder und den Bremsbelägen und/oder der Bremsscheibe wirkverbunden, insbesondere zwischen diesen eingerichtet.

Mittels des Verschleißnachstellers ist verhinderbar oder wird verhindert, dass eine/die Federkraft der besagten Feder durch den Verschleiß von Belägen und Scheibe verringert wird.

Das Bremssystem BS umfasst ferner einen Dreh-zu-Linear-Umsetzer zum Umwandeln eines Drehmoments in eine Kraft.

Mittels des Dreh-zu-Linear-Umsetzers ist ein mittels des Elektromotors M erzeugbares oder erzeugtes Drehmoment in eine Kraft umwandelbar, welche gegen die Feder (bzw. die Federkraft der Feder) wirkt und/oder wirken kann.

In der vorliegenden Ausführungsform umfasst das Bremsystem BS ferner ein Getriebe, welches zwischen den Elektromotor M und den Dreh-zu-Linear-Umsetzer geschaltet ist und/oder dort angeordnet ist.

Mittels des Getriebes ist eine Verstärkung des Motordrehmoments des Elektromotors M erzielbar, welches in dem vorliegenden Anwendungsfall des Bremsystems BS benötigt sein kann.

Es ist auch denkbar, dass das Bremssystem BS ohne ein solches Getriebe konfiguriert ist.

Wie bereits im Zusammenhang mit Fig. 1 erläutert, umfasst die Vorrichtung V den Elektromotor M, eine Motorregelung C, einen ersten, zweiten und dritten normally-closed-Kontakt NC1, NC2, NC3, einen ersten, zweiten und dritten Widerstand W1, W2, W3 und ein Relais R.

Der Elektromotor M ist elektrisch mit der Motorregelung C, welche eine Leistungsphase umfasst, verbunden.

Der erste, der zweite und der dritte Widerstand W1, W2, W3 bilden eine bzw. die Parallelschaltung P.

Jedem Widerstand W1, W2, W3 ist ein Kondensator C1, C2, C3 insbesondere parallel geschaltet zugeordnet.

Die besagte Parallelschaltung P ist zwischen der Motorregelung C und dem Elektromotor M angeordnet.

Insbesondere ist jedes Widerstand-Kondensator-Paar einer Elektromotorwicklung zugeordnet.

In anderen Worten wird durch die Parallelschaltung P ein Ballastkreis gebildet, wobei der erste, der zweite und der dritte Widerstand W1, W2, W3 einen Ballastwiderstand bilden und die jeweiligen Kondensatoren C1, C2, C3 einen Ballastkondensator bilden.

Mittels des Ballastwiderstands ist eine Motordrehzahl nach dem Prinzip der rheostatischen Bremse reduzierbar.

Mittels des Ballastkondensators, welcher von einer bzw. der gegenelektromotorischen Kraft des Elektromotors M aufladbar ist, ist eine bzw. die Form eines bzw. des Kraftgradienten änderbar.

In anderen Worten umfasst der Ballastkreis einen Ballastwiderstand (R_BALLAST), der die Motordrehzahl nach dem Prinzip der rheostatischen Bremse reduziert, und einen Ballastkondensator (C_BALLAST), der von der gegenelektromotorischen Kraft des Motors aufgeladen werden kann, um die Form des Kraftgradienten zu ändern.

Der erste Widerstand W1 ist über den ersten normally-closed-Kontakt NC1, der zweite Widerstand W2 ist über den zweiten normally-closed-Kontakt NC2 und der dritte Widerstand W3 ist über den dritten normally-closed-Kontakt NC3 in der Parallelschaltung P zuschaltbar.

In Fig. 3 hält ein Schalter SW3 die normally-closed-Kontakte NC1 bis NC3 offen bis eine Notbremsung angefordert wird.

Der Schalter SW3 kann dem Relais R aus Fig. 1 auf der Sicherheitsschleife des Zuges SZ entsprechen und/oder als solches fungieren.

Dem Schalter SW3 ist ein weiterer Kondensator C_SW3 zugeordnet und/oder diesem vorgeschaltet zur Erhöhung einer Verzugszeit einer bzw. der Krafteinleitung.

Der Schalter SW3 ist mit einem Positionsregler des Bremsystems BS verbunden, insbesondere via dem weiteren Kondensator C_SW3 verbunden.

Der Positionsregler ist signaltechnisch mit dem Elektromotor M verbunden und konfiguriert, um eine Positionsrückmeldung zu erhalten.

Ferner ist der Positionsregler mit der Leistungsphase verbunden.

Das Bremssystem BS umfasst ferner ein Bremssteuergerät, welches mit einer bzw. der Zugsteuerung und mit dem Positionregler signaltechnisch verbunden ist. Ferner ist eine Kraftrückmeldung mittels des Bremssteuergeräts empfangbar insbesondere ausgehend von dem Verschleißnachsteller und/oder der Bremsbeläge.

Der Zugsteuerung und dem Bremssteuergerät sind ferner jeweils ein Schalter SW1, SW2 zugeordnet, mittels welcher eine Stromversorgung zu dem Positionsregler und/oder der Leistungsphase schaltbar ist. Insbesondere ist der Zugsteuerung ein erster Schalter SW1 und dem Bremssteuergerät ein zweiter Schalter SW2 zugeordnet. Der erste und/oder der zweite Schalter SW1, SW2 sind von dem Bremssystem BS umfasst und/oder diesem zugeordnet.

Während der Bremsfunktionen Betriebsbremsung und Notbremsung des Bremssystems BS ist bzw. wird der Elektromotor M von dem Positionsregler über die Leistungsphase der Motorregelung C steuerbar bzw. gesteuert. Eine geforderte Position wird von dem Bremssteuergerät auf der Grundlage einer bzw. der Kraftrückmeldung und der Anforderungen der Zugsteuerung berechnet. Die Bremsfunktion Feststellbremse ist vorliegend durch eine vollständige Entregung des Systems erzielbar.

Vorliegend ist für die Notbremsung eine Begrenzung des Gradienten der Federkraftaufbringung mittels des Ballastkreises, welcher das passive elektronische Element aufweist, erzielbar.

Inbesondere ist der Ballastkreis auslösbar mittels der Zugsteuerung, insbesondere über eine Stromabschaltung des ersten Schalters SW1.

Zusätzlich oder alternativ ist der Ballastkreis auslösbar mittels des Bremssteuergeräts, insbesondere über eine Stromabschaltung des zweiten Schalters SW2.

Zusätzlich oder alternativ ist der Ballastkreis auslösbar mittels des Positionsreglers, insbesondere über eine Stromabschaltung des Schalters SW3.

In anderen Worten wechselt im Anforderungsfall der Schalter SW3 in seinen unbestromten Zustand, wodurch die normally-closed-Kontakte NC1 bis NC3 schließen und dadurch ein Strom zwischen den Windungen fließt, was zu einer Gegeninduktion im Elektromotor M und damit einem Abbremsen des Elektromotors M führt.

Das Abbremsen des Elektromotors M wirkt der Federkraft der passiven Bremseinrichtung beim Zuspannen entgegen, insbesondere via dem Getriebe und/oder dem Dreh-zu-Linear-Umsetzer.

Der Schalter SW3 ist vom Typ Öffner, daher kann im Falle der Vollbestromung des Systems, z.B. durch einen Rückstau im Energienetz, der Ballastkreis ebenfalls ausgelöst sein.

In Fig. 4 ist ein Diagramm gezeigt, welches im Wesentlichen dem Diagramm von Fig. 2 entspricht. In dem Diagramm in Fig. 4 ist die Bremskraft F (in kN) über die Zeit (in s) aufgetragen.

Dabei sind in dem Diagramm die Bremskraftverläufe für verschiedene Widerstände wiedergegeben, welche bei einer Bremskraft F von 0 kN starten, d.h. die Bremse ist vollständig gelöst, und bis zum einem Plateau-Wert steigen, welcher im Wesentlichen den Zustand eines vollständig gebremsten Fahrzeugs repräsentiert.

Für die in Fig. 4 gezeigten Bremskraftverläufe sind folgende Ballastwiderstände in einer erfindungsgemäßen Vorrichtung V und/oder in einem erfindungsgemäßen Bremssystem BS verwendet worden: R1, R2 und R3, wobei sich R1 > R2 > R3 zueinander verhalten.

Im Diagramm gemäß Fig. 4 ist zu sehen, dass bei einer Verwendung eines R3-Widerstandes die Bremskraft im Vergleich zu R1 und R2 zuerst und flach ansteigt und im Vergleich zu R1 und R2 als letztes den Plateau-Wert erreicht, wobei der Gradient der Bremskraftzunahme mit zunehmender Zeit abnimmt bzw. abflacht und sich die Kurve folglich annähernd asymptotisch dem Plateau-Wert nähert.

Bei der Verwendung eines R2-Widerstandes steigt die Bremskraft im Vergleich zu dem R3-Widerstand zeitlich danach und zwar mit einem deutlich steileren Gradienten als bei dem R3-Widerstand an, so dass der Plateau-Wert im Vergleich zu dem R3-Widerstand schneller erreicht ist. Im R2-Kurvenverlauf ist nur ein leichtes Abnehmen des Gradienten zu verzeichnen.

Auffallend ist, dass bei einer Verwendung eines noch größeren Widerstandes, d.h. bei einem R1-Widerstand die Bremskraft im Vergleich zu dem R2- und/oder dem R3-Widerstand später ansteigt und zwar mit einem deutlich steileren Gradienten als bei dem R2- und/oder dem R3-Widerstand, so dass der Plateau-Wert im Vergleich zu dem R2- und/oder dem R3-Widerstand am schnellsten erreicht ist. Im R1-Kurvenverlauf ist nahezu kein Abnehmen des Gradienten zu verzeichnen.

In anderen Worten heißt das, dass je größer der Ballastwiderstand ist, desto kürzer ist eine Bremskraftaufbauzeit, beispielsweise eine Bremskraftaufbauzeit, um 90% einer maximalen Bremskraft und/oder zur vollständigen Bremsung erforderlichen Kraft zu erzielen.

In anderen Worten heißt das, dass je kleiner der Ballastwiderstand ist, desto eher wird eine Bremskraft aufgebaut innerhalb einer Verzugszeit, welche insbesonder bis zu einem Bremskraftwert von 10% einer maximalen Bremskraft und/oder zur vollständigen Bremsung erforderlichen Kraft andauern kann.

### BEZUGSZEICHENLISTE

- C: Motorregelung
- F: Bremskraft
- NC1: erster normally-closed-Kontakt
- NC2: zweiter normally-closed-Kontakt
- NC3: dritter normally-closed-Kontakt
- M: Elektromotor
- P: Parallelschaltung
- R: Relais
- SZ: Sicherheitsschleife des Zuges
- V: Vorrichtung
- W1: erster Widerstand
- W2: zweiter Widerstand
- W3: dritter Widerstand
- BS: Bremssystem
- C1: erster Kondensator
- C2: zweiter Kondesator
- C3: dritter Kondensator
- R_Ballast: Ballastwiderstand
- C_Ballast: Ballastkondensator
- SW1: erster Schalter
- SW2: zweiter Schalter
- SW3: Schalter von Vorrichtung

## Patentansprüche

1. Vorrichtung (V) zur kraftgradientenbasierten Steuerung einer passiven Bremseinrichtung, insbesondere einer passiven elektromechanischen Bremseinrichtung, die Vorrichtung (V) umfassend:
- einen Elektromotor (M) zum Lösen der passiven Bremseinrichtung gegen eine Federkraft, und
- eine Motorsteuerung (C) zur Steuerung des Elektromotors (M), welche zumindest
einfach elektrisch mit dem Elektromotor (M) verbunden ist,
**dadurch gekennzeichnet, dass** die Vorrichtung (V) noch Folgendes umfasst:
- zumindest ein passives elektronisches Element (W1, W2, W3) mit einem elektrischen Widerstand, welches mit dem Elektromotor (M) und der Motorsteuerung (C) verbunden ist, und
- zumindest eine Kontaktschaltung (NC1, NC2, NC3), welche mit dem Elektromotor (M), der Motorsteuerung (C) und dem zumindest einem passiven elektronischen Element (W1, W2, W3) verbunden ist,
wobei die zumindest eine Kontaktschaltung (NC1, NC2, NC3) zwischen einem ersten, elektrisch nichtleitenden Schaltzustand und einem zweiten, elektrisch leitenden Schaltzustand umschaltbar ist,
wobei die Vorrichtung (V) durch den ersten Schaltzustand zur Gegeninduktion des Elektromotors (M) kurzschließbar ist, und
wobei ein Bremskraftgradient der passiven Bremseinrichtung durch den elektrischen Widerstand des zumindest einen passiven elektronischen Elements (W1, W2, W3) steuerbar ist.

2. Vorrichtung (V) nach Anspruch 1,
**dadurch gekennzeichnet, dass**
die Vorrichtung (V) weiter zumindest ein Relais (R) aufweist, mit welchem die zumindest eine Kontaktschaltung (NC1, NC2, NC3) zwischen dem ersten und dem zweiten Schaltzustand umschaltbar ist, wobei das Relais (R) einen ersten, bestromten Zustand und einen zweiten, unbestromten Zustand aufweist.

3. Vorrichtung (V) nach Anspruch 2,
**dadurch gekennzeichnet, dass**
die zumindest eine Kontaktschaltung (NC1, NC2, NC3) eine normally-closed-Kontaktschaltung ist, wobei die normally-closed-Kontaktschaltung von dem zumindest einem Relais (R), welches den ersten Zustand aufweist, in dem ersten Schaltzustand haltbar ist.

4. Bremssystem (BS) zur kraftgradientenbasierten Steuerung einer passiven Bremseinrichtung, insbesondere einer passiven elektromechanischen Bremseinrichtung, wobei das Bremssystem (BS) zumindest eine Vorrichtung (V) nach den Ansprüchen 1 bis 3 aufweist.

5. Verfahren zur kraftgradientenbasierten Steuerung einer Bremseinrichtung, insbesondere einer passiven elektromechanischen Bremseinrichtung, wobei das Verfahren von einer Vorrichtung (V) nach den Ansprüchen 1 bis 3 oder einem Bremssystem nach Anspruch 4 durchführbar ist, und wobei das Verfahren folgende Schritte umfasst:
- Umschalten der zumindest einen Kontaktschaltung (NC1, NC2, NC3) vom ersten Schaltzustand in den zweiten Schaltzustand.

## Claims

1. Device (V) for controlling a passive brake apparatus, in particular a passive electromechanical brake apparatus, based on a force gradient, the device (V) comprising:
- an electric motor (M) for releasing the passive brake apparatus against a spring force, and
- a motor control system (C) for controlling the electric motor (M), which is at least mono-electrically connected to the electric motor (M),
**characterized in that** the device (V) further comprises the following:
- at least one passive electronic element (W1, W2, W3) with an electrical resistance, which is connected to the electric motor (M) and the motor control system (C), and
- at least one contact circuit (NC1, NC2, NC3), which is connected to the electric motor (M), the motor control system (C) and the at least one passive electronic element (W1, W2, W3),
wherein the at least one contact circuit (NC1, NC2, NC3) can be switched between a first, electrically non-conductive switching state and a second, electrically conductive switching state,
wherein the device (V) can be short-circuited by the first switching state for counter-induction of the electric motor (M), and
wherein a braking force gradient of the passive brake apparatus can be controlled by the electrical resistance of the at least one passive electronic element (W1, W2, W3).

2. Device (V) according to claim 1,
**characterized in that**
the device (V) further has at least one relay (R), with which the at least one contact circuit (NC1, NC2, NC3) can be switched between the first and the second switching state, wherein the relay (R) has a first, energized state and a second non-energized state.

3. Device (V) according to claim 2,
**characterized in that**
the at least one contact circuit (NC1, NC2, NC3) is a normally-closed contact circuit, wherein the normally-closed contact circuit can be maintained in the first switching state by the at least one relay (R), which has the first state.

4. Braking system (BS) for controlling a passive brake apparatus, in particular a passive electromechanical brake apparatus, based on a force gradient, wherein the braking system (BS) has at least one device (V) according to claims 1 to 3.

5. Method for controlling a brake apparatus, in particular a passive electromechanical brake apparatus, based on a force gradient, wherein the method can be implemented by a device (V) according to claims 1 to 3 or a braking system according to claim 4, and wherein the method comprises the following steps:
- Switching the at least one contact circuit (NC1, NC2, NC3) from the first switching state into the second switching state.

## Revendications

1. Dispositif (V) de commande basée sur un gradient de force d'un appareil de freinage passif, en particulier d'un appareil de freinage électromécanique passif, le dispositif (V) comprenant :
- un moteur électrique (M) pour libérer l'appareil de freinage passif contre une force élastique et
- une commande moteur (C) pour la commande du moteur électrique (M) qui est reliée au moins simplement électriquement au moteur électrique (M),
**caractérisé en ce que** le dispositif (V) comprend encore ce qui suit :
- au moins un élément électronique passif (W1, W2, W3) avec une résistance électrique qui est reliée au moteur électrique (M) et à la commande moteur (C) et
- au moins un circuit de contact (NC1, NC2, NC3) qui est relié au moteur électrique (M), à la commande moteur (C) et à l'au moins un élément électronique passif (W1, W2, W3),
dans lequel l'au moins un circuit de contact (NC1, NC2, NC3) est commutable entre un premier état de commutation non électroconducteur et un second état de commutation électroconducteur,
dans lequel le dispositif (V) est court-circuitable par le premier état de commutation pour la contre-induction du moteur électrique (M) et
dans lequel un gradient de force de freinage de l'appareil de freinage passif peut être commandé par la résistance électrique de l'au moins un élément électronique passif (W1, W2, W3).

2. Dispositif (V) selon la revendication 1,
**caractérisé en ce que**
le dispositif (V) présente en outre au moins un relais (R), avec lequel l'au moins un circuit de contact (NC1, NC2, NC3) est commutable entre le premier et le second état de commutation, dans lequel le relais (R) présente un premier état alimenté et un second état non alimenté.

3. Dispositif (V) selon la revendication 2,
**caractérisé en ce que**
l'au moins un circuit de contact (NC1, NC2, NC3) est un circuit de contact normalement fermé, dans lequel le circuit de contact normalement fermé peut être maintenu par l'au moins un relais (R) qui présente le premier état, dans le premier état de commutation.

4. Système de freinage (BS) pour la commande basée sur un gradient de force d'un appareil de freinage passif, en particulier d'un appareil de freinage électromécanique passif, dans lequel le système de freinage (BS) présente au moins un dispositif (V) selon les revendications 1 à 3.

5. Procédé de commande basée sur un gradient de force d'un appareil de freinage, en particulier d'un appareil de freinage électromécanique passif, dans lequel le procédé peut être exécuté par un dispositif (V) selon les revendications 1 à 3 ou par un système de freinage selon la revendication 4, et dans lequel le procédé comprend l'étape suivante :
- la commutation de l'au moins un circuit de contact (NC1, NC2, NC3) du premier état de commutation au second état de commutation.
